Europäisches Patentamt

European Patent Office

Office européen des brevets

(19)

(11) Publication number: **0 117 837**
**B1**

(12) **EUROPEAN PATENT SPECIFICATION**

(45) Date of publication of patent specification: **21.03.90**

(21) Application number: **84630030.9**

(22) Date of filing: **27.02.84**

(51) Int. Cl.⁵: **G 06 F 15/16,** G 06 F 15/76, G 06 F 13/36, G 06 F 12/06

(54) User programmable bus configuration for microcomputers.

(30) Priority: **01.03.83 US 471079**

(43) Date of publication of application:
**05.09.84 Bulletin 84/36**

(45) Publication of the grant of the patent:
**21.03.90 Bulletin 90/12**

(84) Designated Contracting States:
**DE FR GB NL**

(56) References cited:
**US-A-4 349 870**

WESCON 1982 CONFERENCE RECORD, vol. 26,
14th-16th September 1982, paper 5C/1, pages
1-5, North Hollywood, US; D. FOLKES: "Meeting
high-end needs with a single-chip"

ELECTRO 1982 CONFERENCE RECORD, 25th-
27th May 1982, paper 14/3, pages 1-7, IEEE, New
York, US; R. MATNEY: "Microprogrammable
slave processor for flexible distributed control"

(73) Proprietor: **SGS-THOMSON
MICROELECTRONICS, INC. (a Delaware corp.)**
**1310 Electronics Drive**
**Carrollton, TX 75006 (US)**

(72) Inventor: **Briggs, Williard S.**
**2248 Roundrock Circle**
**Carrollton Texas 75007 (US)**
Inventor: **Gant, Alan D.**
**5981 Arapaho, Suite No. 304**
**Dallas Texas 75248 (US)**

(74) Representative: **Ballot, Paul Denis Jacques**
**Cabinet Ballot-Schmit 7, rue le Sueur**
**F-75116 Paris (FR)**

Courier Press, Leamington Spa, England.

## Description

Technical field

The field of the invention is that of microcomputers which have a bus within the CPU for accessing internal memory locations and also use a bus external to the CPU chip for communication with memory and/or for communicating with another system such as another computer.

Background art

When a computer and another computer (or an input/output device) share a common bus, it is necessary to have some sort of arbitration in order to decide which device controls the bus and for how long. Conventionally, the bus arbitration scheme and the decision as to which device is a bus grantor, and which is a bus requestor is decided before a system is constructed. Further, most of the computer system design is frozen when the microprocessor chip is designed. Questions such as what memory address range will be on-chip and what will be off-chip; whether the microprocessor will be a bus master or bus slave or the number of buses available are all determined when the system is laid out. In the particular case of microcomputers, those which are on a single chip or on a small number of chips, the pin count is a limitation on the number of buses which may be used.

The economics of very large-scale integrated circuits or microcomputers are such that it is necessary to have long production runs in order to pay for the design costs of these elaborate systems. In order to use these large-scale chips, however, it is necessary to add a number of supplementary chips to adapt the large-scale chip to the particular application in question. The cost of installing these additional less complicated chips can be much greater than the cost of the complex chip, and it would be economically advantageous to have a special purpose complex chip. Unfortunately, special purpose complex chips also have high design costs which usually cannot be recouped over a short product run.

An architecture of microprocessor usable in either a single-chip microcomputer mode or a multichip mode is mentioned in the Wescon 1982 Conference Record, Vol. 26, 14—16 September 1982, paper 5C/1, pages 1—5, North Hollywood, US; D. Folkes: Meeting High-End Needs with a Single-Chip".

Disclosure of invention

The invention relates to a flexible system of microcomputers in which the programmer may change the system configuration from a single chip microcomputer to a multi-chip microcomputer during the course of a program.

Brief description of drawings

Fig. 1A illustrates schematically the memory map of one embodiment of the invention.

Fig. 1B illustrates schematically the memory map of an alternative embodiment of the invention.

Fig. 2A illustrates schematically a system including a microcomputer and a local bus which accesses off-chip memory.

Fig. 2B illustrates a microcomputer with a local bus accessing off-chip memory connected by a buffer to a host bus which is controlled by a host CPU.

Fig. 3 illustrates schematically a portion of the CPU of a microcomputer constructed according to the invention.

Fig. 4 illustrates in more detail a portion of the schematic of Fig. 3.

Best mode for carrying out the invention

The subject invention was made in the course of developing a family of microcomputers for Mostek Corporation of Carrollton, Texas and further information may be found in the publication MK68200, Principles of Operation, Version 2.1, dated July 1982 and available from Mostek Corporation, 1215 West Crosby Road, Carrollton, Texas 75006. This family of microcomputers was designed with an eye to providing great flexibility of system operation and includes hardware that permits it to be used as: (a) a single chip microcomputer having on-chip ROM and RAM with a generalized I/O or (b) in a "Partial expansion" configuration in which there is both on-chip ROM and RAM and off-chip ROM and/or RAM or (c) in a "full expansion" configuration in which there is on-chip RAM; there is not on-chip ROM and there is off-chip ROM and/or RAM. In configuration (b) or (c) above, the microcomputer may be either a bus master or bus slave, so that there are five possible modes. The inclusion of hardware that will provide some function when the hardware is activated will be referred to as providing the hardware capability for the function.

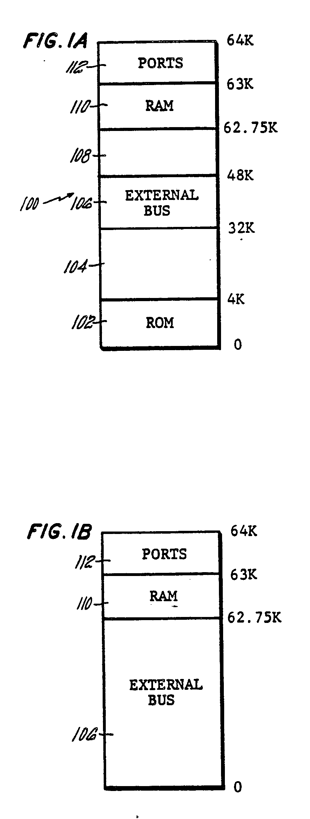

In this family of microcomputers, the input/output devices and other registers used as ports are mapped in memory space. The machine uses a 16 bit word so that the address range available is 64K (65,536) bytes. A map of the memory space for the partial expansion configuration is shown in Figure 1A, indicated generally by the number 100. Memory addresses in section 102, which extends from 0—4K, are used for on-chip ROM. Section 106 of the map, occupying addresses between 32K and 48K, is used as window for external memory or input/output. Within this window, there is available an automatic bus arbitration feature which is disclosed in copending European Patent Application with publication Number EP—A—0117836. Section 110, occupying the range from 62.75K—63K, is used for on-chip RAM. Section 112, occupying from 63K—64K, is reserved for ports, registers which may be simply temporary storage devices within the computer or may be buffer registers which connect to output pins. All the input/output of the computer is memory mapped and those addresses which go on general input/output buses pass through one of several ports.

In the single chip configuration, there is no external bus and the window between 32K and 48K in memory space is not used. In that case, the memory space from 4K to 62.75K is reserved for ROM and RAM expansion.

In the full expansion mode, shown in Fig. 1B, there is no on-chip ROM and the address range from 0—62.75K is available for external memory. In this case, if the chip is a bus requestor the automatic arbitration feature for control of the external bus is available only through the 16K window. If a local bus that has only one computer is used, the arbitration feature will not be needed.

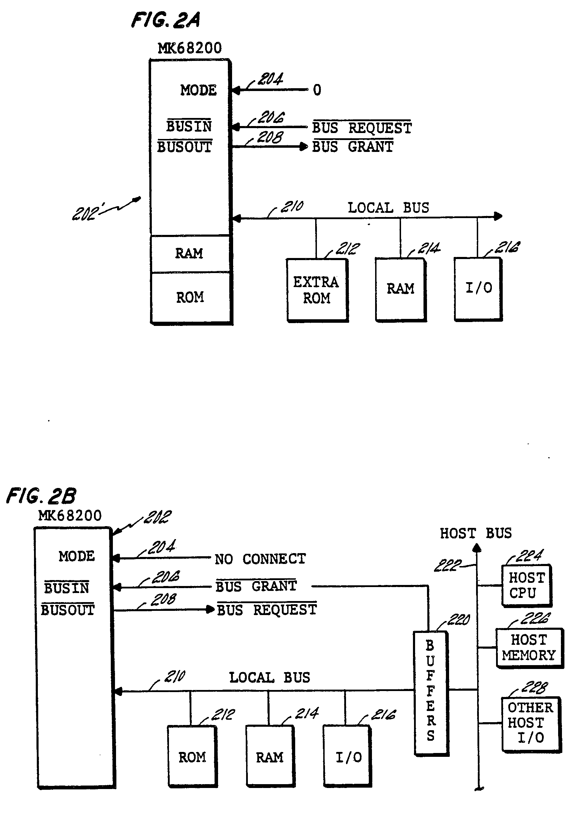

Two sample microcomputer configurations are shown in Fig. 2, in which Fig. 2A shows a partial expansion mode in which there is on-chip ROM as well as on-chip RAM. There is also a local bus 210 which is a 16 bit bus accessing additional ROM 212, additional RAM 214 and additional input/output devices 216, which may be a cathode-ray tube or any other input/output device. The bus is controlled by two signals $\overline{\text{BUSIN}}$ 206 and $\overline{\text{BUS-OUT}}$ 208. The mode of operation, i.e., single chip, partial expansion, or full expansion is controlled by an external signal applied to mode pin 204. Conventionally, in the illustrative embodiment, a logical one on pin 204 determines that the computer is in the single chip configuration, a logical zero determines that the computer is in the partial expansion mode and no connection determines that the computer is in the full expansion mode. As will be described below, this configuration may be modified by the programmer during the execution of a program. Computer 202 is the bus master and pin 206 carries a bus request from peripherals and pin 208 carries a bus grant from the CPU.

Fig. 2B illustrates an alternative configuration in which local bus 210 and the local memory are as before and there is added a buffer 220 and an additional bus 222 coupling the microcomputer to a host CPU 224 along with the host memory 226 and other host input/output devices 228. In this configuration, microcomputer 202 will be the bus slave when dealing with the host CPU 224. When local bus 210 is being used, there is no need to request bus arbitration or to wait for another device to become free because the microcomputer 202 is the only CPU on the bus. Even though computer 202 is in the slave mode, so long as the addresses of ROM 212 and RAM 214 are outside the 16K DMA window (section 106 in Fig. 1A), there is no need to wait for a bus grant signal because the CPU treats these addresses as on-chip and bus arbitration is not used. When the host bus 222 is accessed, it will be necessary for computer 202 to send a bus request on line 208 and to wait for a bus grant signal to come on line 206 before data can be transferred out of local bus 210. When the host CPU is ready to grant access to the host bus 222, it sends a signal to buffer 220 on control lines not shown to couple the two buses and also sends the bus grant signal to microcomputer 202. The bus grant and request lines are omitted from the drawing for simplicity.

In this case, local bus and shared host bus address references using the same address may be differentiated by the presence of the bus request signal on pin 208. As is disclosed in copending European Patent Application with publication number EP—A—0117836, the 16K DMA window 106 may be used to address the full 64K memory address range by substituting appropriate high order bits for the two bits that flag an external memory reference. There may be, therefore, addresses in address ranges 102, 104, 108 and 110 that refer to both memory connected to local bus 210 and to memory connected to host bus 222. When computer 202 is accessing local bus 210, the bus request signal will be in the inactive state. When it wishes to access the host bus 222, bus request pin 208 will become active.

In both Figs. 2A and 2B, computer 202 may be in either the full expansion or partial expansion mode. In one particular application, a partial expansion mode is used, so that on-chip ROM is accessible. A bootstrap program is stored in the on-chip ROM. When the system power is turned on and powered up, it is in the partially expanded or nonexpanded mode so that the on-chip ROM is accessible. The bootstrap program is then run, initializing parameters and checking out the system. At the end, the bootstrap program can then switch to the full expansion mode and the bootstrap program is effectively removed from the system. Memory addresses in the range 0—62.75K will be put out on local bus 210. Memory addresses within the range 0—4K, which are within the range of the bootstrap program, will also be sent out on the local bus and the bootstrap program in ROM will not be used. With this particular arrangement, the full range of 62.75K is available for the operating program.

Another example is a system such as that outlined in Fig. 2B in which the host CPU 224 is a MK68000 microprocessor, manufactured by Mostek Corporation, and computer 202 is configured to operate efficiently with computer 224. In this case, the handshake signals which control the operation of the local bus 210 are set as is disclosed in chapter 8 of the Principles of Operation Manual to match the handshake of CPU 224. Host CPU 224 can then write one word directly into a port in computer 202. This cannot be done in the expanded mode but can be done in the nonexpanded mode, where CPU 224 writes an address into CPU 202 which will be a vector pointing to a stored program or stored routine that is stored within host memory 226. Once computer 202 has received the address, it switches to the expanded mode and accesses host memory 226 through the external window that is between 32K and 48K. For example, the host 224 would set up a problem, alter parameters which describe the operations to be performed that are characteristic of the particular job being run and then tell computer 202 where within memory 226 to find the altered parameters.

Local bus 210, in Fig. 2, accesses 16 pins referred to in the manual as port 0. The bus is controlled by 8 pins which are the 8 high order bits of port 1. When computer 202 is used for general purpose input/output, the control signals are a read/write signal and a data transfer acknowledge signal which is an input to the computer 202 and is brought low when the addressed device has finished its portion of the cycle. An address strobe signal is normally high and is brought low when the address is stable on the multiplex bus. A data strobe signal is brought low to signify the data portion of the bus cycle. For read operations, data strobe should be used by the external device to gate its contents onto local bus 210. For write operations data strobe signifies that valid data from computer 202 is on bus 210. High byte and low byte signals indicate which byte of the data bus is to be read or written. DMA bus input may be used whether the computer 202 is in a master or slave mode. When computer 202 is the bus master, then bus input is a bus request signal from a slave on the bus. When computer 202 is a bus slave, but input is the bus grant signal from the local bus master. Bus output signal is the converse of the bus input signal.

There are 8 different handshaking conventions, controlled by 4 bits within register 324 that are available when computer 202 is in the nonexpansion, single chip mode. These 8 different modes provide different handshaking conventions to interface computer 202 with other computers. The same bits are used to control whether the computer 202 is in the partial expansion or full expansion mode, when the 8 handshaking conventions are not available. During the reset operation, which is a microprogram described in chapter 10 of the manual, the state of mode pin 204 is sensed and is used to set the handshaking bits in register 324. During the operation of the program these bits may be changed using the bit instructions described in the instruction set.

The master/slave option is also set during the reset program. This master or slave alternative is set by the STRH bit of the port 4 pins which are used to control the handshake mode. A signal applied to the STRH pin during the time when the reset signal is active will determine master/slave. One clock cycle after the reset signal has been removed, the pin reverts to its normal function. If the STRH pin is not used during system operation, that pin may be strapped to the desired value. If it is being used during operation, either an AND-gate or an OR-gate may be used, as is described in paragraph 2.9 of the manual.

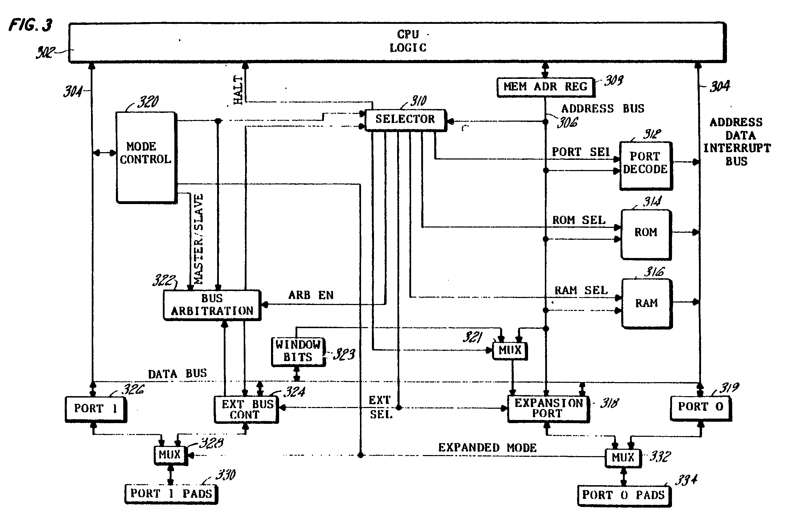

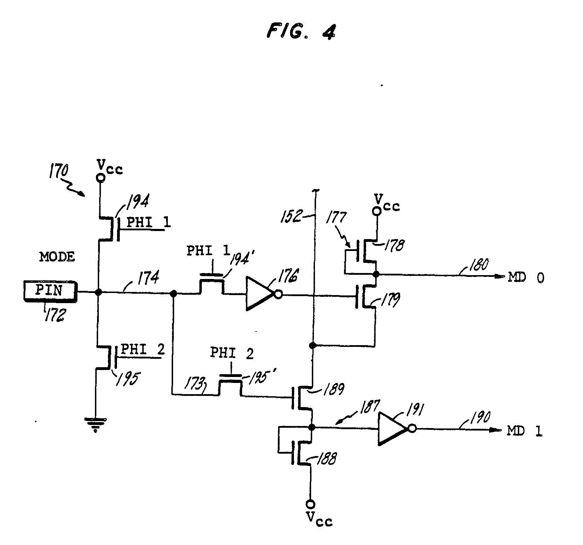

Fig. 3 illustrates a portion of the CPU which controls the bus configuration and also the bus arbitration feature which is the subject of copending European Patent Application with publication number EP—A—0117836. Mode control unit 320, which is described in more detail in Fig. 4, responds to the voltage on a dedicated pin to determine the bus expansion mode by setting the bits in register 324. Mode control unit 320 sends a signal indicating that an external bus is part of the system to selector 310 which scrutinizes the addresses of memory references to determine whether the automatic bus arbitration sequence is required. Mode control 320 also sends a signal to bus arbitration unit 322 indicating whether the system is in a master or slave configuration and indicating that an external bus is part of the system.

Mode control unit 320 also sends a signal to multiplexers 328 and 332, which control signals are applied to the pads associated with the main port (port 0) and port 1 (half of which carries the control signals for the 16 pin external bus that connects to port 0).

When an address in the external memory range appears in memory address register 303, selector 310 sends an "external memory cycle" signal to bus arbitration unit 322, initiating the automatic sequence that acquires control of the bus. Unit 322 has been informed previously by unit 320 that there is an external bus in the system and whether the CPU is bus grantor or requestor. Unit 320 responds to the initial state of the system during power-up to set two bits in register 324 that indicate the expansion state of the memory. These bits may be modified during program operation and the information is transmitted to arbitration unit 322.

Fig. 4 shows the relevant portion of mode control unit 320, in which mode control circuit 170 responds to one of three states of voltage on pin 172 in order to determine whether the microcomputer will have only on-chip memory, no on-chip memory, or both on-chip and off-chip memory. The voltage on pin 172 goes into line 173 to transistor 195' and also along line 174 where it is inverted by inverter 176 the output of which connects to the gate of transistor 179. Transistor 179 is part of unit 177 which also includes pull-up 178 which controls the voltage on line 180 unless its effect is nullified by transistor 179. If transistor 179 is on, then the voltage on line 180 will reflect the voltage on line 152 to which transistor 179 is connected. For the purposes of this disclosure, line 152 is always low, so that pin 172 low forces line 180 low. Similarly, unit 187 consists of pull-up 188 which controls the inverse of the voltage on line 190 unless its effect is nullified by transistor 189. When transistor 189 is on in response to the voltage on line 173 (pin 172 high), then the voltage on line 190 will be the inverse of the voltage on line 152. Since line 152 is low, line 190 is high when pin 172 is high. When 172 is floating, transistor pairs 194, 194' and 195, 195' force lines 180 and 190 into high and low states, respectively. Transistor 194 is connected between VCC and line 174 and is controlled by one of two non-overlapping clock signals, PHI 1. When transistors 194 and 194' are on, line 174 is charged to a high voltage, and transistor 179 is therefore turned off, so that line 180 is high. When transistors 194 and 194' are off, inverter 176 is isolated from transistors 195 and 195' by transistor 194'. Inverter 176 has sufficient input capacitance to maintain its state when the input is briefly isolated. Similarly, transistor 195 and 195' control the input of inverter 191 forcing the input high during the PHI 2 clock and isolating transistor 189 when transistor 195' is off. Again, the capacitance in inverter 191 maintains line 190 low, even when PHI 2 is off. Transistor 194 and 195 are purposely made with a small current capacity, so that they do not disturb an external circuit that forces pin 172 high or low. The effective voltage on lines 180 and 190 in response to various conditions on pin 172 is shown in Table 1, and those skilled in the art will readily observe the operation of the circuit.

The bus access sequence will depend on whether the CPU is bus grantor or requestor, of course. The CPU has a $\overline{\text{BUSIN}}$ input control line that receives a $\overline{\text{BUS GRANT}}$ signal from the bus grantor if the CPU is in the slave (requestor) mode (or a $\overline{\text{BUS REQUEST}}$ signal from another device if the CPU is the bus grantor). There is a $\overline{\text{BUSOUT}}$ output control line that receives a grant signal to an external grantor (or puts out a grant signal to an external requestor).

Briefly, the control line is checked to see if another device is using the bus. In the slave mode, a bus request signal is asserted on $\overline{\text{BUS-OUT}}$ and, until the bus is available, a signal from unit 322 to selector 310 indicates that the CPU cannot proceed with the external reference. The CPU will proceed with internal references, until it needs the result of the external access, at which time it will wait until the bus cycle is completed. When the bus grant signal is received on the $\overline{\text{BUSIN}}$ line, the shared-bus enable signal is returned to selector 310 and signals are put on the bus. (If the CPU is bus grantor, it is still necessary to check if the bus is in use.)

TABLE I

| Mode Pad | | Outputs | |
|---|---|---|---|
| | | MDO | MDI |
| Fuse | 0 | 0 | 0 |
| | 1 | 1 | 1 |
| Intact | Float | 1 | 0 |

**Claim**

A microcomputer having a first integrated circuit chip containing a central processing unit (CPU) and input/output means (port 0), said CPU having hardware that is capable of accessing on-chip memory (314, 316), said input/output means and on-chip memory both mapped in a memory space, whereby said computer has the hardware capability of being embodied in a first mode of a single-chip microcomputer or in a second mode of a multi-chip microcomputer comprising said first chip and at least one memory chip, characterized in that:

in said microcomputer said hardware capability is implemented by signal selection and routing means (310) for controlling the path of a memory address signal, whereby a memory access may be to on-chip memory or to off-chip memory under control of said signal selection and routing means;

said signal selection and routing means operates under control of a mode control circuit (320), which is responsive to the content of a programmable register (324) and non-responsive to memory addresses, whereby data may be transferred between said CPU and at least two different physical address locations using the same instructions, both of which physical address locations have the same memory address in said memory space, one of said physical address locations, having said same memory address, being accessible in a first mode and the other of said physical address locations, having said same memory address, being accessible in a second mode; and

said register (324) being programmable during program execution for receiving information on which mode should be used, whereby a predetermined range of memory addresses containing stored data in a first physical location may be utilized during a first stage of program execution in said first mode and said predetermined range of memory addresses containing stored data in a second physical location may be utilized during a second stage of program execution in said second mode.

**Patentanspruch**

Ein Mikrocomputer mit einem ersten integrierten Schaltkreischip, enthaltend eine Zentraleinheit (CPU) und Eingabe/Ausgabe-Mittel (Anschluß 0), wobei diese Zentraleinheit Hardware hat, die auf eine On-Chip-Speicher (314, 316) zugreifen kann, wobei dieses Eingabe/Ausgabe-Mittel und dieser On-Chip-Speicher beide in einem Speicherraum abgebildet sind und dieser Computer die Hardware-Fähigkeit hat, in einem ersten Modus eines Einzelchip-Mikrocomputers oder in einem zweiten Modus eines Multichip-Mikrocomputers enthalten zu sein, der diesen ersten Chip und mindestens einen Speicherchip umfaßt, dadurch gekennzeichnet, daß:

in diesem Mikrocomputer diese Hardware-Fähigkeit durch Signalauswahl- und Leitwegmittel (310) implementiert ist, um den Pfad eines Speicheradressiersignals zu steuern, wobei ein Speicherzugriff auf einen On-Chip-Speicher oder Off-Chip-Speicher unter der Kontrolle dieses Signalauswahl- und Leitwegmittels sein kann;

dieses Signalauswahl- und Leitwegmittel unter der Kontrolle eines Modussteuerkreises (320) arbeitet, der zwar auf den Inhalt eines programmierbaren Registers (324) reagiert, aber nicht auf Speicheradressen, wobei Daten zwischen dieser Zentraleinheit und mindestens zwei verschiedenen physikalischen Adreßstellen unter Verwendung derselben Befehle übertragen werden können, und diese beiden physikalischen Adreßstellen dieselbe Speicheradresse in diesem Speicherraum haben, wobei auf eine dieser physikalischen Adreßstellen—mit dieser gleichen Speicheradresse—in einem ersten Modus zugegreiffen werden kann und auf die andere dieser physikalischen Adreßstellen—mit dieser gleichen Speicheradresse—in einem zweiten Modus zugegriffen werden kann; und

dieses Register (324) während der Programmausführung programmierbar ist, um Informationen über den zu verwendenden Modus zu empfangen, wobei ein vorgegebener Bereich von Speicheradressen, die gespeicherte Daten in einer ersten physikalischen Stelle enthalten, während einer ersten Programmausführungsstufe in diesem ersten Modus verwendet werden kann, und dieser vorgegebene Bereich von Speicheradressen, die gespeicherte Daten in einer zweiten physikalischen Stelle enthalten, während einer zweiten Programmausführungsstufe in diesem zweiten Modus verwendet werden kann.

**Revendication**

Un micro-ordinateur ayant un premier chip à circuit intégré comportant une unité centrale (CPU) et un moyen entrée/sortie (port 0), ladite unité centrale ayant du hardware capable d'accéder à une mémoire on-chip (314, 316), ledit moyen entrée/sortie et ladite mémoire on-chip étant projetés dans un espace mémoire et ledit ordinateur ayant la capacité de hardware d'être compris dans un premier mode de micro-ordinateur monochip ou dans un second mode d'un micro-ordinateur multichip comportant ledit premier chip et au moins un chip de mémoire, caractérisé en ce que:

dans ledit micro-ordinateur ladite capacité de hardware est mise en application par un moyen de sélection et d'acheminement de signal (310) pour commander la route d'un signal d'adressage de mémoire, un accès de mémoire pouvant être à une mémoire on-chip ou off-chip sous le contrôle dudit moyen de sélection et d'acheminement de signal;

ledit moyen de sélection et d'acheminement de signal fonctionne sous le contrôle d'un circuit de commande du mode (320) qui réagit au contenu d'un registre programmable (324), mais non à des adresses de mémoire, des données pouvant être transférées entre ladite unité centrale et au moins deux emplacements physiques d'adresse différentes en utilisant les mêmes instructions, les deux emplacements physiques d'adresse ayant la même adresse de mémoire dans ledit espace mémoire, un desdits emplacements physiques d'adresse, ayant cette même adresse de mémoire, étant accessible dans un premier mode, et l'autre desdits emplacements physiques d'adresse, avec ladite même adresse de mémoire, étant accessible dans un second mode; et

ledit registre (324) étant programmable pendant l'exécution du programme pour recevoir une information disant quel mode devra être utilisé, une gamme prédéterminée d'adresses de mémoire qui contiennent des données stockées dans un premier emplacement physique pouvant être utilisée pendant une première étape d'exécution de programme dans ledit premier mode, et ladite gamme prédéterminée d'adresses de mémoire qui contiennent des données stockées dans un second emplacement physique pouvant être utilisée pendant une deuxième étape d'exécution de programme dans ledit second mode.

FIG. IA

| | |
|---|---|
| PORTS | 64K |
| | 63K |
| RAM | |
| | 62.75K |
| | 48K |
| EXTERNAL BUS | |
| | 32K |
| | |
| | 4K |
| ROM | |
| | 0 |

112
110
108
100 — 106
104
102

FIG. IB

| | |
|---|---|
| PORTS | 64K |
| | 63K |
| RAM | |
| | 62.75K |
| EXTERNAL BUS | |
| | 0 |

112
110
106

1

## FIG. 2A

MK68200

MODE ← 204 — 0

$\overline{\text{BUSIN}}$ ← 206 — $\overline{\text{BUS REQUEST}}$

$\overline{\text{BUSOUT}}$ → 208 → $\overline{\text{BUS GRANT}}$

202'

RAM

ROM

210 — LOCAL BUS

212 — EXTRA ROM

214 — RAM

216 — I/O

## FIG. 2B

MK68200

202

MODE ← 204 — NO CONNECT

$\overline{\text{BUSIN}}$ ← 206 — $\overline{\text{BUS GRANT}}$

$\overline{\text{BUSOUT}}$ → 208 → $\overline{\text{BUS REQUEST}}$

HOST BUS

222

224 — HOST CPU

220 — BUFFERS

226 — HOST MEMORY

210 — LOCAL BUS

212 — ROM

214 — RAM

216 — I/O

228 — OTHER HOST I/O

2

FIG. 3

FIG. 4